# EUROPEAN PATENT APPLICATION

(11) **EP 3 415 411 A2**
(43) Date of publication of application: **19.12.2018**
(21) Application number: 18175902.8
(22) Date of filing: 05.06.2018
(51) Int. Cl.: B62L 1/00

(54) **PAD FOR A BICYCLE DISC BRAKE AND BICYCLE DISC BRAKE ASSEMBLY COMPRISING SUCH A PAD**

(30) Priority: 15.06.2017 IT 201700066560
(71) Applicant: Campagnolo S.r.l., 36100 Vicenza (VI) (IT)
(72) Inventor: MEGGIOLAN, Mario, I-36051 CREAZZO (Vicenza) (IT); BOVE, Filippo, I-35129 Padova (IT)
(74) Representative: Porta, Checcacci & Associati S.p.A

(57) **Abstract**

The invention relates to a pad (1) for a bicycle disc brake, comprising a support frame (10), an element made of friction-wearing material (20) associated with a first portion (15) of the support frame (10) and at least one heat-dissipating element (60) having at least one portion associated with the first portion (15) of the support frame (10).

## Description

The present invention relates to a pad for a bicycle disc brake.

The invention also relates to a bicycle disc brake assembly comprising such a pad.

The invention further relates to a brake caliper for a bicycle disc brake.

Throughout the present description and in the following claims, with "bicycle" a racing bicycle, a roadster bicycle or an electric bicycle (e-bike) is meant.

The invention has a preferred application in the field of racing bicycles.

As known, it is now common in bicycles to use disc brakes. Such brakes are indeed often preferred to other kinds of conventional brakes because they ensure a high braking force and they are less subject to problems caused by mud or water.

Typically, a disc brake comprises a brake caliper mounted on the frame of the bicycle (in particular on the fork or on the stays of the frame, depending on whether it is a disc brake for the front wheel or a disc brake for the rear wheel of the bicycle, respectively) and a brake disc mounted on the hub of the wheel.

Two or four opposite pads are provided inside the brake caliper. The brake disc rotates inside the space defined between the opposite pads. By actuating the brake lever, the pads are brought towards the brake disc, generating friction on the brake disc and, consequently, braking the wheel.

Mechanically-controlled disc brakes and hydraulically-controlled disc brakes are known. In the former the movement of the pads following the actuation of the brake lever takes place by means of a pulling action exerted by a metallic cable associated with the brake lever and with the brake caliper that supports the pads. In the latter the movement of the pads takes place by means of the pushing action exerted by a hydraulic piston on each pad.

The pads typically each comprise a support frame intended to be coupled with the brake caliper and an element made of friction-wearing material (hereinafter also indicated as "brake lining") associated with the support frame and intended to slide on the brake disc during braking. The pads must be replaced when the brake linings reach a certain degree of wear.

The Applicant has observed that in use the maximum resistant power of the pad can reach even 800 W and, particularly following repeated braking, when for example the cyclists are in a group, or riding downhill, the temperature of the brake caliper can reach very high temperatures, equal even to about 100°C.

The heat generated during braking must be removed since otherwise undesired phenomena can occur, like for example the "crystallization" or "burning" of the brake lining and the "fading". Such phenomena result in a substantial reduction of the friction coefficient of the brake lining and, consequently, a substantial drop in performance of the brake, as well as an undesired expansion of the support frame and/or of the brake lining.

Solutions are known that are adapted to allow removal of the heat from the pads of bicycle disc brakes.

US 6206151 describes a disc brake wherein the support frame of the pads comprises grooves and/or fins formed in one piece with the support frame itself.

US 9487263 describes a disc brake wherein the support frame of the pads comprises a support portion of the brake lining and a cooling portion adjacent to the support portion and provided with fins. The fins can be formed in one piece with the cooling portion, or they can be mounted on the cooling portion.

The Applicant has sought solutions aimed at allowing removal of the heat from the pads of bicycle disc brakes and that are alternatives to the known solutions described above.

The technical problem at the basis of the present invention is that of providing a pad for a bicycle disc brake that ensures an extremely efficient removal of heat.

The present invention therefore relates, in a first aspect thereof, to a pad for a bicycle disc brake, comprising a support frame, an element made of friction-wearing material associated with a first portion of said support frame and at least one heat-dissipating element associated with said support frame, characterized in that at least one portion of said at least one heat-dissipating element is associated with said first portion of said support frame.

Advantageously, the provision of a heat-dissipating element having a portion associated with the portion of the support frame which the brake lining is associated with makes it possible to remove the heat by conduction directly from the portion of the support frame in which it is generated.

Preferably, said at least one portion of said at least one heat-dissipating element is in direct contact with the element made of friction-wearing material.

In this way, the removal of heat is even more effective.

In a first embodiment of the pad of the invention, the element made of friction-wearing material is associated with a first face of said first portion of support frame and said at least one portion of said at least one heat-dissipating element is associated with said first face.

In a second embodiment of the pad of the invention, the element made of friction-wearing material is associated with a first face of said first portion of support frame and said at least one portion of said at least one heat-dissipating element is associated with a second face of said first portion of support frame opposite to said first face.

In the preferred embodiments of the invention, said at least one heat-dissipating element is associated with a second portion of said support frame adjacent to said first portion of said support frame.

In this way the heat removed from the portion of the support frame which the brake lining is associated with is immediately transferred to a portion of support frame that is at a lower temperature, thus obtaining an effective removal of heat.

Preferably, said at least one heat-dissipating element is housed in at least one seat formed on said second portion of said support frame.

In this way the heat-dissipating element is protected and the space occupied by it is limited.

Preferably, said second portion of said support frame comprises a through-opening for mounting the pad on a brake caliper.

In some embodiments of the pad of the invention, said at least one seat is arranged between said through-opening and said first portion of said support frame.

In other embodiments of the pad of the invention, said through-opening is arranged between said at least one seat and said first portion of said support frame.

In further embodiments of the pad of the invention, the pad comprises a first heat-dissipating element housed in a first seat formed on said second portion of said support frame between said through-opening and said first portion of said support frame, and a second heat-dissipating element housed in a second seat formed on said second portion of support frame on the opposite side to said first seat with respect to said through-opening.

Preferably, said second portion of support frame has a predetermined thickness and said at least one heat-dissipating element has an overall thickness lower than, or equal to, said predetermined thickness.

In this case, advantageously, the heat-dissipating element does not project outside of the support frame.

Preferably, said first portion of said support frame has a thickness lower than said predetermined thickness.

Preferably, said at least one heat-dissipating element comprises a central main portion and opposite end portions, wherein at least one of said opposite end portions is associated with said first portion of support frame and defines said at least one portion of said at least one heat-dissipating element.

Advantageously, the end portion(s) of the heat-dissipating element transfer(s) the heat from the portion of the support frame which the brake lining is associated with to the central main portion of the heat-dissipating element.

Preferably, said central main portion is housed in said at least one seat.

Preferably, said at least one heat-dissipating element comprises a wire-like element.

More preferably, said central main portion of said at least one heat-dissipating element comprises a helical winding of said wire-like element having a circular or square geometry.

Advantageously, the use of a wire-like element wound helically makes it possible to increase the heat exchange surface.

Even more preferably, said at least one of said opposite end portions of said at least one heat-dissipating element comprises a rectilinear portion of said wire-like element.

Preferably, said wire-like element has a circular or square section. The circular section is easier to obtain than the square one, whereas the square section makes it possible to have a larger heat exchange surface.

Preferably, said support frame is made of aluminum. Such a material has good thermal conductivity and thus allows optimal removal of heat from the portion of the support frame which the brake lining is associated with.

More preferably, said at least one heat-dissipating element is made of a material having a coefficient of thermal conductivity greater than that of aluminum, so as to facilitate the removal of heat.

In a second aspect thereof, the invention relates to a bicycle disc brake assembly comprising at least one pair of pads in accordance with the present invention, wherein said pads are at least partially housed in a brake caliper.

Consequently, the bicycle disc brake assembly has all of the advantages indicated above with reference to the pad of the invention.

In some embodiments of the aforementioned assembly, said at least one heat-dissipating element is at least partially arranged outside of said brake caliper. For example, this occurs when the heat-dissipating element, or one of the heat-dissipating elements, is arranged above the through-opening for mounting the pad on the brake caliper.

In this way the heat-dissipating element is in direct contact with the air outside of the brake caliper, whereby the heat is removed quickly by means of a heat exchange by convection with air.

In a third aspect thereof, the invention relates to a brake caliper for a bicycle disc brake, comprising a main body having a slot for housing at least one pair of pads, characterized in that said main body comprises at least one heat-dissipating element.

Advantageously, the provision of a heat-dissipating element on the main body of the brake caliper makes it possible to cool the brake caliper, with consequent advantages in terms of effectiveness of braking.

Preferably, said at least one heat-dissipating element is arranged at said slot. This makes it possible to cool the brake caliper precisely at the area in which the heat is generated during braking.

More preferably, the brake caliper comprises at least one first heat-dissipating element arranged at a first side of said slot and at least one second heat-dissipating element arranged at a second side of said slot opposite to said first side.

Preferably, said at least one heat-dissipating element comprises a plurality of fins.

More preferably, the fins of said plurality of fins are all parallel to one another.

Further features and advantages of the invention will become clearer from the description of preferred embodiments thereof, made with reference to the attached drawings, wherein:
- figure 1 is a schematic perspective view of a brake caliper comprising a first preferred embodiment of a pad for a bicycle disc brake in accordance with the present invention;
- figure 1a is a schematic orthogonal view of the brake caliper of figure 1 with a brake disc;
- figure 2 is a schematic perspective view of the pad used in the brake caliper of figures 1 and 1a;
- figure 3 is a schematic front view of the pad of figure 2;
- figure 4 is a schematic side section view of the pad of figure 2;
- figure 5 is a schematic rear view of the pad of figure 2;
- figure 6 is a schematic perspective view of a component (heat-dissipating element) of the pad of figure 2;
- figure 7 is a schematic side view of a brake caliper comprising a second preferred embodiment of a pad for a bicycle disc brake in accordance with the present invention;
- figure 8 is a schematic front view of the pad of figure 7;
- figure 9 is a schematic side section view of the pad of figure 7;
- figure 10 is a schematic rear view of the pad of figure 7;
- figure 11 is a schematic front view of a third preferred embodiment of a pad for a bicycle disc brake in accordance with the present invention;
- figure 12 is a schematic side section view of the pad of figure 11;
- figure 13 is a schematic rear view of the pad of figure 11;
- figure 14 is a schematic front view of a fourth preferred embodiment of a pad for a bicycle disc brake in accordance with the present invention;
- figure 15 is a schematic side section view of the pad of figure 14;
- figure 16 is a schematic rear view of the pad of figure 14;
- figure 17 is a schematic perspective view of a component (heat-dissipating element) of the pad of figure 14;
- figure 18 is a schematic front view of a fifth preferred embodiment of a pad for a bicycle disc brake in accordance with the present invention;
- figure 19 is a schematic side section view of the pad of figure 18;
- figure 20 is a schematic rear view of the pad of figure 18.

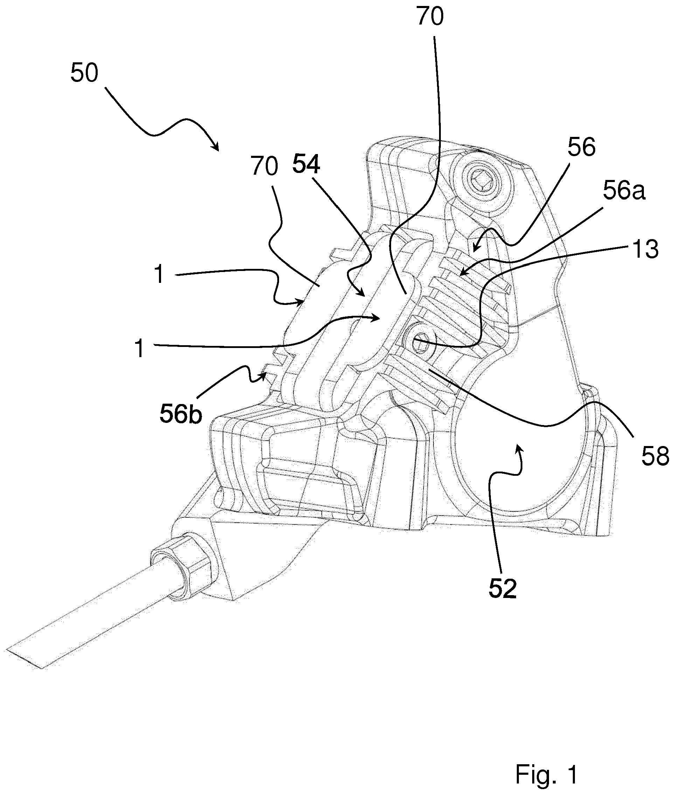

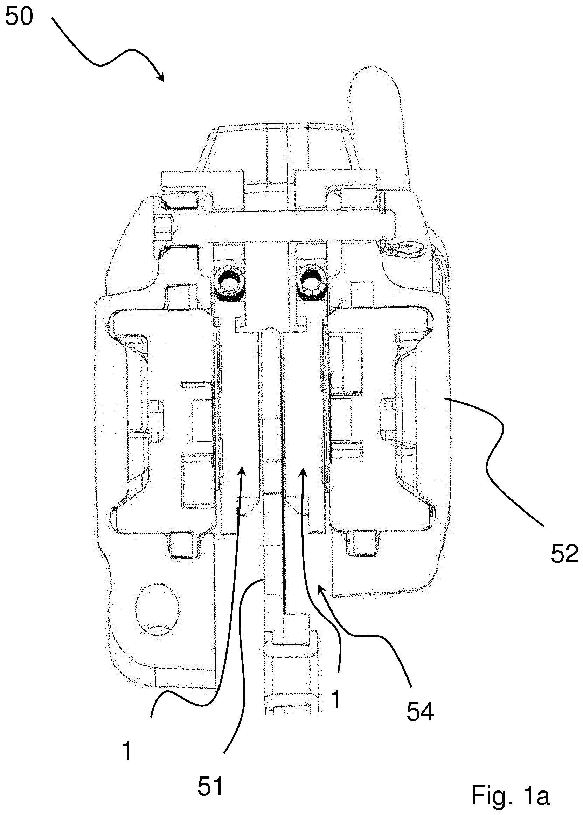

With initial reference to the attached figures 1-6, reference numeral 1 indicates a first preferred embodiment of a pad for a bicycle disc brake in accordance with the present invention.

The disc brake comprises a brake caliper 50 (figure 1) configured to be associated with the frame (not illustrated) of a bicycle and a brake disc 51 (figure 1a) configured to be associated with a hub (not illustrated) of a front or rear wheel of the bicycle.

The brake caliper 50 of figure 1 and 1a is associated with the frame portion of the bicycle at which the rear wheel of the bicycle is mounted. The brake caliper 50 could, however, also be mounted at the frame portion of the bicycle at which the front wheel of the bicycle is mounted.

What is been described hereinafter with respect to the pad 1 and to the respective disc brake is valid identically in the case of a disc brake for a front wheel of the bicycle.

At least two opposite pads 1 in accordance with the present invention are provided inside the brake caliper 50.

The brake caliper 50 comprises a main body 52 provided with a slot 54 accessible from the outside and wherein the pads 1 are inserted. The slot 54 has a plane of symmetry substantially coinciding with a transversal mid-plane of the main body 52, which in turn coincides with the mid-plane of the brake disc.

The main body 52 illustrated in figures 1 and 1a is defined by a single piece. However, it could also be made by assembling two distinct pieces through screws.

Means for dissipating the heat generated at the pad 1 during braking are provided on the main body 52.

As illustrated in figure 1, such heat-dissipating means comprise a heat-dissipating element 56 associated with the main body 52 at each pad 1.

In particular, a heat-dissipating element 56 is arranged at the slot 54 on both sides of the main body 52. A pair of heat-dissipating elements 56a, 56b arranged symmetrically on the opposite sides of the slot 54 are thus identified.

Each heat-dissipating element 56a, 56b comprises a plurality of fins 58.

Preferably, the fins 58 are parallel to one another and are arranged substantially perpendicular to the transversal mid-plane of the main body 52.

The brake disc comprises a radially outer annular portion that is arranged inside the space defined between the pads 1. By actuating the brake lever (not illustrated), the pads 1 are brought towards the brake disc (which rotates as a unit with the wheel of the bicycle), generating friction on the brake disc and, consequently, braking the wheel.

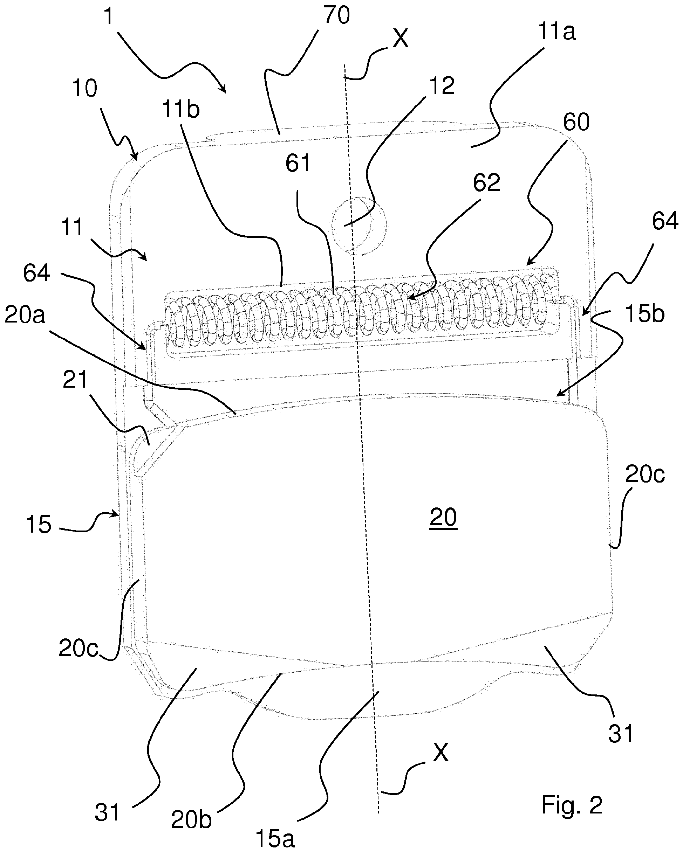

With reference to figures 2-5, the pad 1 comprises a support frame 10 configured to be associated with the brake caliper 50. An element made of friction-wearing material 20 is associated with the support frame 10.

The support frame 10 is made of a metallic material. Preferably, the support frame 10 is made of aluminum or alloys thereof.

The element made of friction-wearing material 20 can be made of organic materials, like for example glass fibers or copper fibers with resins, or of metallic materials, like for example sintered metallic powders.

The support frame 10 has a substantially rectangular and flattened shape.

The support frame 10 comprises a first portion 15 on which the element made of friction-wearing material 20 is associated and a second portion 11 for fastening to the brake caliper 50.

The second portion 11 of the support frame 10 is adjacent to the first portion 15 and comprises a through-opening 12 for housing a pin 13 (figure 1) configured to support the pad on the brake caliper 50.

As illustrated in figures 2, 3 and 5, the support frame 10 has a preferably symmetrical shape with respect to a transversal mid-plane X-X that passes through the center of the hole 12.

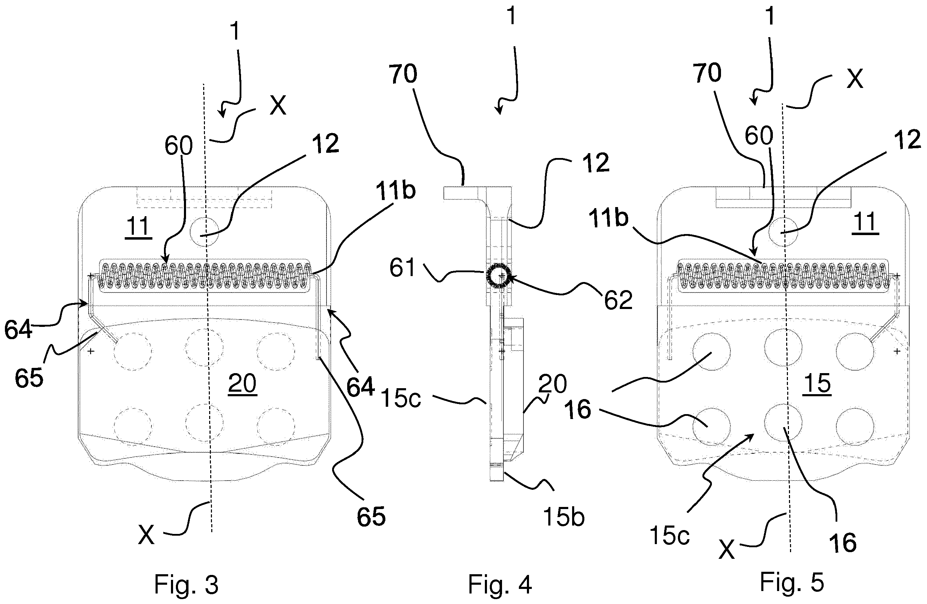

As shown in figure 5, the first portion 15 for supporting the element made of friction-wearing material 20 comprises a plurality of holes 16 (six in the specific example illustrated here) that house, by interference, corresponding portions of the element made of friction-wearing material 20. The latter is therefore coupled with the support frame 10 by interference in the holes 16 and, preferably, by gluing on a face 15b of the first portion 15 of the support frame 10. In figure 5, reference numeral 16 is associated with only some of the aforementioned holes.

The first portion 15 for supporting the element made of friction-wearing material 20 has a substantially rectangular shape, with a lower part that has a central area 15a extending downwardly.

In the present description and in the following claims the expressions "upper", "lower" and "side" are used with reference to a front view of the pad oriented like in the figure 2 attached hereto.

The element made of friction-wearing material 20 has a substantially rectangular shape. It comprises an upper surface 20a, a lower surface 20b substantially parallel to the upper surface 20a, and a pair of opposite side surfaces 20c substantially perpendicular to the upper 20a and lower surfaces 20b.

The upper surface 20a is slightly convex, whereas the lower surface 20b is slightly concave.

The element made of friction-wearing material 20 has a predetermined thickness and comprises, typically in a side end area of the upper portion thereof, a visual wear indicator 21. In particular, as illustrated in figure 2, the visual wear indicator 21 is defined at a joining edge of the upper surface 20a and of one of the side surfaces 20c of the element made of friction-wearing material 20. Alternative embodiments are provided in which the visual wear indicator 21 is provided on both the side end areas of the upper portion of the element made of friction-wearing material 20.

As illustrated in figure 2, the element made of friction-wearing material 20 comprises a beveled lower portion. Such a beveled lower portion extends along the lower surface 20b of the element made of friction-wearing material 20 and comprises opposite side end areas each having a tapering 31.

The tapering 31 is defined at the opposite joining edges of the lower surface 20b and of the side surfaces 20c of the element made of friction-wearing material 20.

Alternative embodiments of the pad 1 of the present invention are provided in which the tapering 31 is defined only at one of the opposite side end areas of the lower portion of the element made of friction-wearing material 20.

The second portion 11 of the support frame 10 has a width substantially equal to that of the first portion 15 and has a predetermined thickness. As illustrated in figure 4, the first portion 15 has a thickness lower than such a predetermined thickness.

The second portion 11 of the support frame 10 comprises, in addition to the through-opening 12 for mounting the pad 1 at the brake caliper 50, a seat 11b for housing heat-dissipating members of the pad 1.

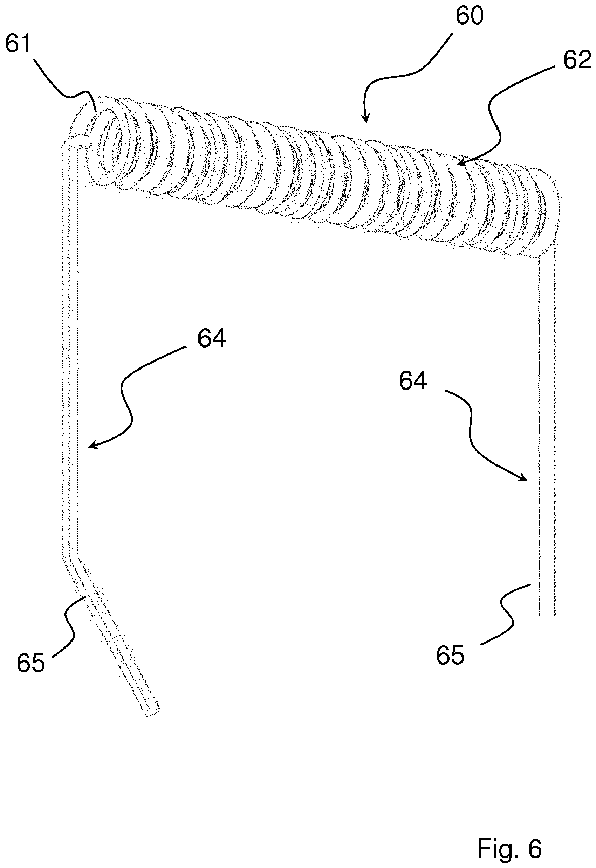

Such heat-dissipating members comprise a heat-dissipating element 60 having a central main portion 62 (figure 6) housed in the aforementioned seat 11b and opposite end portions 64 arranged outside of the seat 11b.

As illustrated in figure 4, the seat 11b is a through-seat; in other words it passes through the entire thickness of the second portion 11. The seat 11b has an elongated shape, which is substantially parallelepiped. The seat 11b extends in a direction substantially perpendicular to the transversal mid-plane X-X, and is symmetrical with respect to such a plane.

The seat 11b is arranged between the through-opening 12 and the first portion 15 of the support frame 10.

As illustrated in figure 6, the heat-dissipating element 60 comprises a wire-like element 61 that is wound helically to form a plurality of coils that define the aforementioned central main portion 62 of the heat-dissipating element 60. Such coils have a circular geometry. In figure 4 it can be seen that the diameter of the coils of the central main portion 62 is such that such coils do not project with respect to the portion 11 of the support frame 10.

Preferably, the heat-dissipating element 60 is made of a material having a coefficient of conductivity greater than that of the support frame 10, preferably copper or alloys thereof.

The wire-like element 61 has a substantially circular section, but it could also have a substantially square or substantially rectangular section.

The opposite end portions 64 of the heat-dissipating element 60 each comprise a rectilinear end portion 65 that extends until it reaches the first portion 15 of the support frame 10.

Preferably, one or both of the rectilinear portions 65 of the wire-like element 61 are in direct contact with the element made of friction-wearing material 20.

In particular, one or both of the rectilinear portions 65 of the wire-like element 61 can be in direct contact with a first face 15b of the first portion 15 where the element made of friction-wearing material 20 is associated, as illustrated in figure 4 (in such a figure both of the rectilinear portions 65 of the wire-like element 61 are in direct contact with the element made of friction-wearing material 20).

The rectilinear portions 65 of the wire-like element 61 can also be embedded in the first portion 15 of the support frame 10 or be arranged at least partially under the element made of friction-wearing material 20, as illustrated in figure 4.

Alternative combinations of the aforementioned arrangements of the rectilinear portions 65 of the wire-like element 61 are also possible.

The support frame 10 also comprises a gripping handle 70 for the insertion and the extraction of the pad 1 in the brake caliper 50. In particular, the gripping handle 70 extends substantially perpendicular to the second portion 11 of the support frame 10, at the upper part 11a of the latter, on the opposite side to the element made of friction-wearing material 20.

As illustrated in figure 1, once the pad 1 is mounted in the brake caliper 50 the gripping handle 70 remains outside of the brake caliper 50 whereas the heat-dissipating element 60 is arranged inside the brake caliper 50.

A pneumatic piston (not illustrated) is associated with the pad 1, in particular with the face 15c of the first portion 15 of the support frame 10. The pneumatic piston belongs to a pneumatic circuit of a hydraulically-controlled disc brake.

A magnetic element (not illustrated) is arranged between the pneumatic piston and the support frame 10. Such a magnetic element is fixedly associated with the pneumatic piston and coupled by magnetic attraction with the support frame 10. As an alternative to the magnetic element it is possible to use a spring.

When the brake lever is actuated each pneumatic piston pushes the respective pad 1 against the brake disc. When the brake lever is released, each pneumatic piston goes back into its initial position and each pad 1 moves away from the brake disc by means of the magnetic attraction on the support frame 10 (which as stated is made of metallic material) exerted by the magnetic element fixedly connected to the respective pneumatic piston. Therefore, the disc brake is a hydraulically-controlled brake and the return of the pads 1 in the rest position when the brake is deactivated takes place by means of the magnetic attraction exerted by the magnetic element of the respective pneumatic piston on the support frame.

In an alternative embodiment of a hydraulically-controlled disc brake, instead of the aforementioned magnetic element a spring is used arranged between the two support frames 10 of the pads 1 of the disc brake. When the brake lever is activated, each pneumatic piston pushes the respective pad 1 against the brake disc, compressing the spring. When the brake lever is released, each pneumatic piston goes back into its initial position and each pad 1 moves away from the brake disc by means of the elastic thrust exerted by the spring.

The pad 1 described above can also be used in a manually-controlled disc brake.

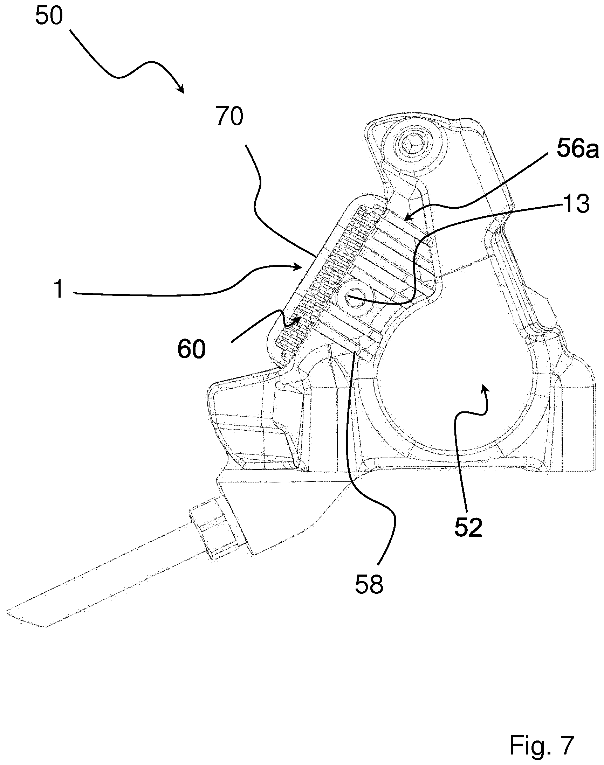

A second preferred embodiment of the pad 1 of the invention is illustrated in figures 7-10, in which elements that are structurally or functionally equivalent to those already described with reference to the first embodiment of the pad 1 of the invention are indicated with the same reference numeral.

In this second preferred embodiment, the pad 1 is mounted in a brake caliper 50 substantially identical to that of figures 1, 1a.

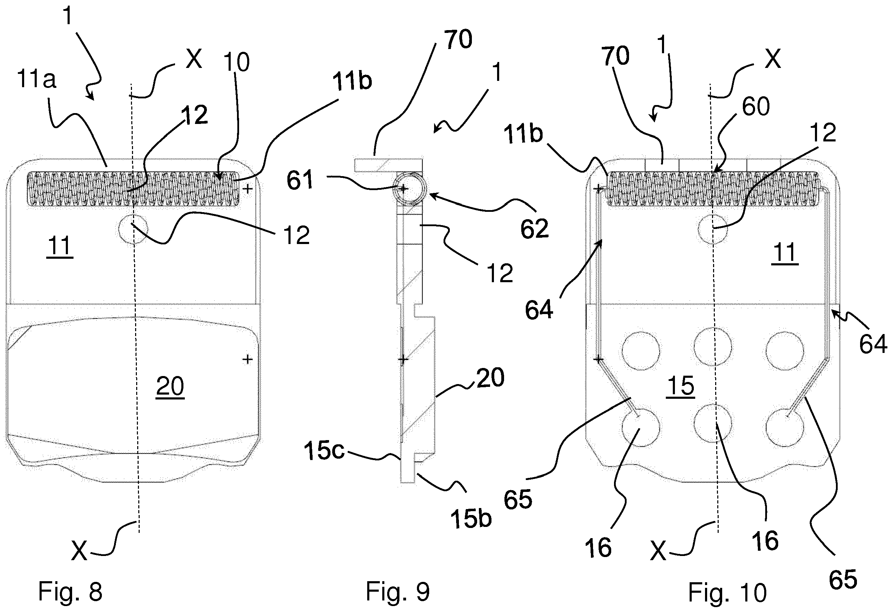

The pad 1 of figures 7-10 differs from the pad 1 of figures 1-6 solely in that the seat 11b for housing the central main portion 62 of the heat-dissipating element 60 is arranged between the through-opening 12 and the upper part 11a of the second portion 11 of the support frame 10 and in that the coils of the helical winding of the central main portion 62 of the heat-dissipating element 60 have a diameter greater than that of the coils of the helical winding of the central main portion 62 of the heat-dissipating element 60 of the pad 1 of figures 1-6. In figure 9 it can be seen that the diameter of the coils of the central main portion 62 is in this case such that the coils project with respect to the portion 11 of the support frame 10.

Once the pad 1 is mounted in the brake caliper 50 (figure 7), the central main portion 62 of the heat-dissipating element 160 is arranged, substantially entirely, outside of the main body 52 of the brake caliper 50.

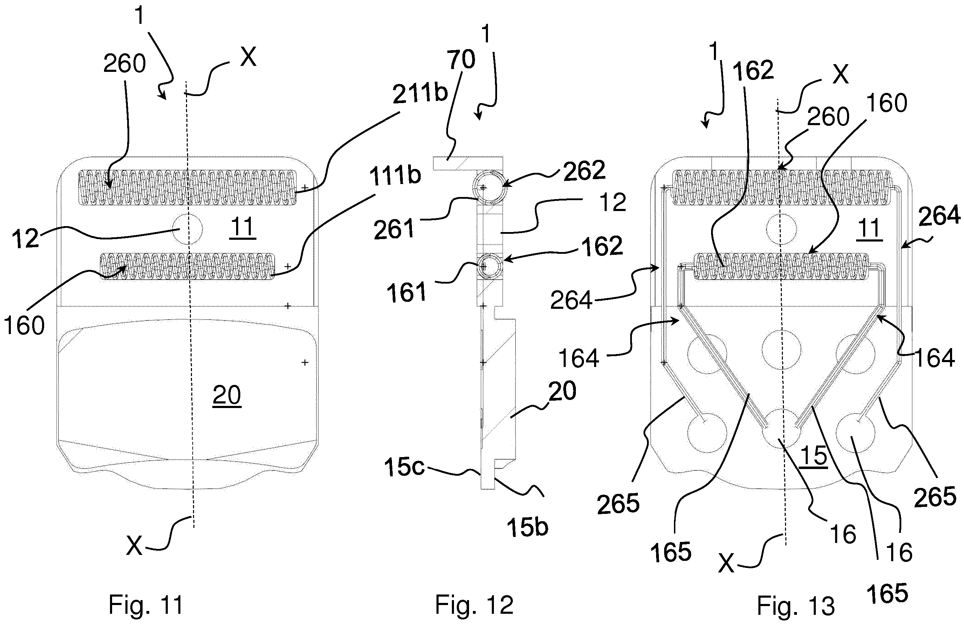

A third preferred embodiment of the pad 1 of the invention is illustrated in figures 11-13, in which elements that are structurally or functionally equivalent to those already described with reference to the first and second embodiment of the pad 1 of the invention are indicated with the same reference numeral.

In this third preferred embodiment, the pad 1 is mounted in a brake caliper 50 substantially identical to that of figures 1, 1a.

The pad 1 of figures 11-13 differs from the pad 1 of figures 1-10 solely in that the heat-dissipating means comprise a first heat-dissipating element 160, substantially analogous to the heat-dissipating element 60 of the pad 1 of figures 1-6, housed in a first seat 111b formed between the through-opening 12 and the portion 15 of the support frame 10 (substantially analogous to the seat 11b in figures 1-6) and a second heat-dissipating element 260, substantially analogous to the heat-dissipating element 60 of the pad 1 of figures 7-10, housed in a second seat 211b formed between the through-opening 12 and the upper part 11a of the second portion 11 of the support frame 10 (substantially analogous to the seat 11b in figures 7-10).

As illustrated in figures 11 and 13, the seat 111b is shorter than the seat 211b, and is shorter than the seat 11b of the pad 1 of figures 1-6. The seat 211b, on the other hand, is identical to the seat 11b of the pad 1 of figures 7-10.

The heat-dissipating element 160 is substantially identical to the heat-dissipating element 60 of the pad 1 of figures 1-6 except that it has a central main portion 162 shorter than that of the heat-dissipating element 60 of the pad 1 of figures 1-6 and rectilinear end portions 165 longer than the rectilinear end portions 65 of the heat-dissipating element 60 of the pad 1 of figures 1-6. The end portions 165 each contact two of the portions of the element made of friction-wearing material 20 housed in the holes 16 formed in the portion 15 of the support frame 10.

The heat-dissipating element 260, on the other hand, is substantially identical to that of the pad 1 of figures 7-10.

As illustrated in figure 13, the opposite end portions 164 of the heat-dissipating element 160 comprise respective rectilinear portions 165 arranged closer to the transversal mid-plane X-X with respect to the rectilinear portions 265 of the heat-dissipating element 260.

Preferably, the rectilinear portions 165 of the heat-dissipating element 160 are substantially parallel to the rectilinear portions 265 of the heat-dissipating element 2.

Once the pad 1 is mounted in the brake caliper 50, the central main portion 262 of the heat-dissipating element 260 is arranged, substantially entirely, outside of the main body 52 of the brake caliper 50, whereas the heat-dissipating element 160 is arranged inside the brake caliper 50.

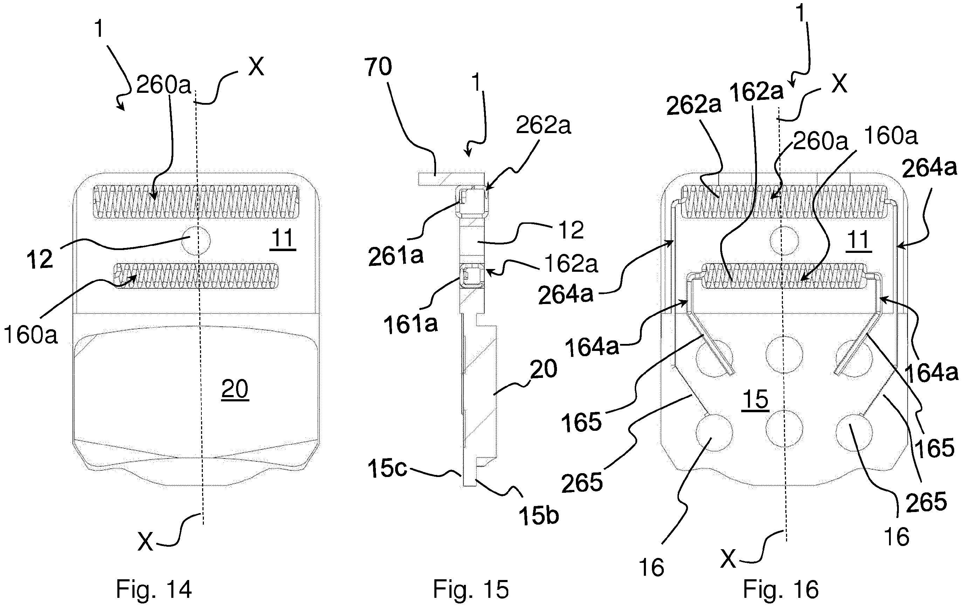

A fourth preferred embodiment of the pad 1 of the invention is illustrated in figures 14-17, in which elements that are structurally or functionally equivalent to those already described with reference to the third embodiment of the pad 1 of figures 11-13 are indicated with the same reference numeral.

In this fourth preferred embodiment, the pad 1 is mounted in a brake caliper 50 substantially identical to that of figures 1 or 7.

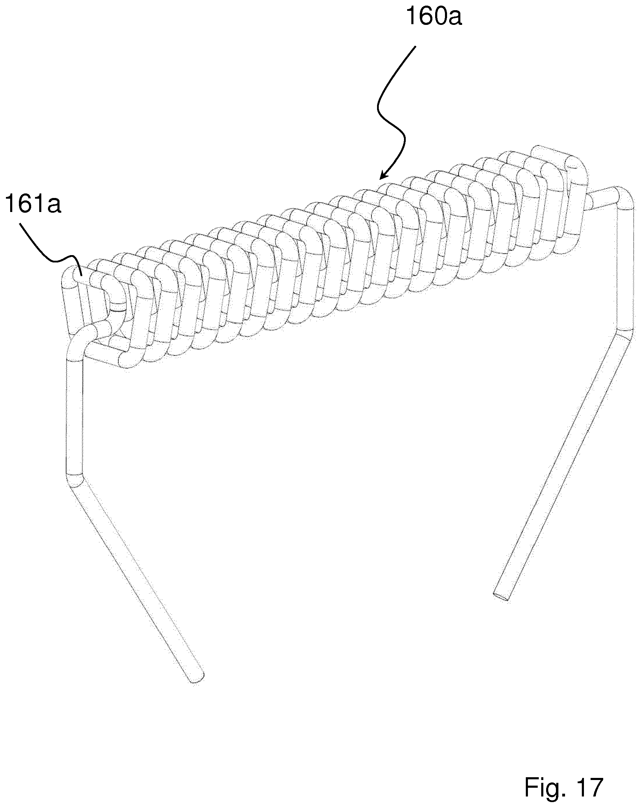

The pad 1 of figures 14-17 differs from the pad 1 of figures 11-13 substantially in the heat-dissipating means, which comprise heat-dissipating elements 160a, 260a that differ from the heat-dissipating elements 160, 260 of the pad 1 of figures 11-13 in that they are made from wire-like elements 161a a having a substantially square (or substantially rectangular) geometry, as illustrated in figure 15 and, with particular reference to the heat-dissipating element 160a, in figure 17.

The adoption of the aforementioned heat-dissipating elements on the pad 1 and/or on the brake caliper 50 gives the possibility of evaluating the formulation of different compositions for the compounds of the element made of friction-wearing material 20, also including graphene, so as to increase the conductivity thereof. Furthermore, since the temperature of the element made of friction-wearing material is lower thanks to the removal of heat, the expansion difference between support frame 10 and element made of friction-wearing material 20 is reduced and this makes the union of the two components more stable.

The helical windings formed by the wire-like elements of the heat-dissipating elements of the pad 1 can have different pitches along the same winding.

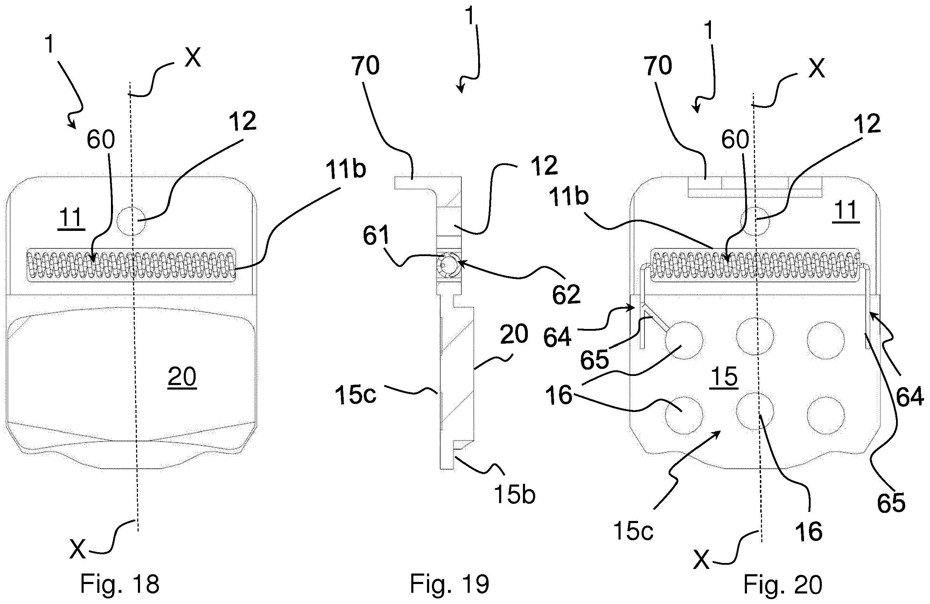

A fifth preferred embodiment of the pad 1 of the invention is illustrated in figures 18-20, in which elements that are structurally or functionally equivalent to those already described with reference to the first embodiment of the pad 1 of figures 1-6 are indicated with the same reference numeral.

In this fifth preferred embodiment, the pad 1 is mounted in a brake caliper 50 substantially identical to that of figures 1, 1a.

The pad 1 of figures 18-20 differs from the pad 1 of figures 1-6 solely in that both the opposite end portions 64 of the heat-dissipating element 60, and the respective rectilinear portions 65 of the wire-like element 61, are in direct contact with the second face 15c of the first portion 15 and only one of such rectilinear portions 65 contacts the element made of friction-wearing material 20 at one of its portions housed in the holes 16 formed in the portion 15 of the support frame 10.

The embodiment of figures 1-6 and 18-20 has the advantage of occupying the minimum space outside of the brake caliper 50. The heat exchange surface of the heat-dissipating element can for example be equal to about 430 mm² with a wire-like element having a circular section of diameter equal to about 0.7 mm.

The embodiments of figures 7-17 have a slightly larger support frame. In such embodiments a heat-dissipating element is arranged outside of the brake caliper 50. In these embodiments the heat exchange is maximized both because there is a heat exchange with moving air, outside of the brake caliper 50, at a lower temperature, and thanks to the increase in the heat exchange surface, which can reach for example an extension of about 1100 mm² with a wire-like element having a circular section of diameter equal to about 0.7 mm and an extension of about 1400 mm² with a wire-like element having a square section, wherein each side of the square has a length equal to about 0.7 mm.

The Applicant has carried out some tests and has found that:
- by making the heat-dissipating element 60 through a wire-like element 61 that is 25 mm in length and having a circular section with a diameter equal to 0.7 mm, such a wire-like element 61 being wound helically with a pitch equal to 1 mm to form coils having a diameter equal to 4 mm, the heat exchange surface of the pad 1 of figures 1-6 and 18-20 would be equal to about 600 mm²;
- by making the heat-dissipating element 60 through a wire-like element 61 that is 25 mm in length and having a circular section with a diameter equal to 1.2 mm, such a wire-like element 61 being wound helically with a pitch equal to 1.5 mm to form coils having a diameter equal to 4 mm, the heat exchange surface of the pad 1 of figures 1-6 and 18-20 would be equal to about 700 mm².

This confirms that, all other conditions being equal, as the diameter of the wire-like element increases, the heat exchange surface increases.

The Applicant has carried out further tests and has found that:
- by making the heat-dissipating element 160 through a wire-like element 161 that is 20 mm in length and having a circular section with a diameter equal to 0.7 mm, such a wire-like element 161 being wound helically with a pitch equal to 1 mm to form coils having a diameter equal to 3 mm, and making the heat-dissipating element 260 through a wire-like element 261 that is 25 mm in length and having a circular section with a diameter equal to 1.2 mm, such a wire-like element 261 being wound helically with a pitch equal to 1.5 mm to form coils having a diameter equal to 4 mm, there would be a heat exchange surface equal to about 350 mm² at the heat-dissipating element 160 and equal to about 700 mm² at the heat-dissipating element 260, so that the overall heat exchange surface of the pad 1 of figures 11-13 would be equal to 1050 mm²;
- by making the heat-dissipating element 160 through a wire-like element 161 that is 20 mm in length and having a square section with side of the square equal to 0.7 mm, such a wire-like element 161 being wound helically with a pitch equal to 1 mm to form coils having a diameter equal to 3 mm, and making the heat-dissipating element 260 through a wire-like element 261 that is 25 mm in length and having square section with side of the square equal to 1.2 mm, such a wire-like element 261 being wound helically with a pitch equal to 1.5 mm to form coils having a diameter equal to 4 mm, there would be a heat exchange surface equal to about 450 mm² at the heat-dissipating element 160 and equal to about 900 mm² at the heat-dissipating element 260, so that the overall heat exchange surface of the pad 1 of figures 11-13 would be equal to 1350 mm².

This confirms that, all other conditions being equal, the use of a wire with a square section allows an increase of the heat exchange surface.

Of course, those skilled in the art can bring numerous modifications and variants to the present invention, in order to satisfy specific and contingent requirements, all of which are in any case encompassed by the scope of protection defined by the following claims.

## Claims

1. Pad (1) for a bicycle disc brake, comprising a support frame (10), an element made of friction-wearing material (20) associated with a first portion (15) of said support frame (10) and at least one heat-dissipating element (60, 160, 260, 160a, 260a) associated with said support frame (10), **characterized in that** at least one portion (65, 165, 265) of said at least one heat-dissipating element (60, 160, 260, 160a, 260a) is associated with said first portion (15) of said support frame (10).

2. Pad (1) according to claim 1, wherein said at least one portion (65, 165, 265) of said at least one heat-dissipating element (60, 160, 260, 160a, 260a) is in direct contact with said element made of friction-wearing material (20).

3. Pad (1) according to claim 1 or 2, wherein said element made of friction-wearing material (20) is associated with a first face (15b) of said first portion (15) of said support frame (10) and wherein said at least one portion (65, 165, 265) of said at least one heat-dissipating element (60, 160, 260, 160a, 260a) is associated with said first face (15b).

4. Pad (1) according to claim 1 or 2, wherein said element made of friction-wearing material (20) is associated with a first face (15b) of said first portion (15) of said support frame (10) and wherein said at least one portion (65, 165, 265) of said at least one heat-dissipating element (60, 160, 260, 160a, 260a) is associated with a second face (15c) of said first portion (15) of said support frame (10) opposite to said first face (15b).

5. Pad (1) according to any one of the previous claims, wherein said at least one heat-dissipating element (60, 160, 260, 160a, 260a) is associated with a second portion (11) of said support frame (10) adjacent to said first portion (15) of said support frame (10), said at least one heat-dissipating element (60, 160, 260, 160a, 260a) being preferably housed in at least one seat (11b, 111b, 211b) formed on said second portion (11) of said support frame (10).

6. Pad (1) according to claim 5, wherein said second portion (11) of said support frame (10) comprises a through-opening (12) for mounting the pad (1) on a brake caliper (50), wherein said at least one seat (11b, 111b) is arranged between said through-opening (12) and said first portion (15) of said support frame (10), or said through-opening (12) is arranged between said at least one seat (211b) and said first portion (15) of said support frame (10).

7. Pad (1) according to claim 5 or 6, comprising a first heat-dissipating element (160, 160a) housed in a first seat (111b) formed on said second portion (11) of said support frame (10) between said through-opening (12) and said first portion (15) of said support frame (10), and a second heat-dissipating element (260, 260a) housed in a second seat (211b) formed on said second portion (11) of said support frame (10) on the opposite side to said first seat (111b) with respect to said through-opening (12).

8. Pad (1) according to any of claims 5 to 7, wherein said second portion (11) of said support frame (10) has a predetermined thickness, wherein said at least one heat-dissipating element (60, 160, 160a) has an overall thickness lower than, or equal to, said predetermined thickness and, preferably, said first portion (15) of said support frame (10) has a thickness lower than said predetermined thickness.

9. Pad (1) according to any one of the previous claims, wherein said at least one heat-dissipating element (60, 160, 260, 160a, 260a) comprises a central main portion (62, 162, 262, 162a, 262a) and opposite end portions (64, 164, 264), wherein at least one of said opposite end portions (64, 164, 264) is associated with said first portion (15) of said support frame (10) and defines said at least one portion (65, 165, 265) of said at least one heat-dissipating element (60, 160, 260, 160a, 260a), wherein preferably said central main portion (62, 162, 262, 162a, 262a) is housed in said at least one seat (11b, 111b, 211b).

10. Pad (1) according to claim 9, wherein said at least one heat-dissipating element (60, 160, 260, 160a, 260a) comprises a wire-like element (61, 161, 261,161a, 261a), wherein said central main portion (62, 162, 262, 162a, 262a) of said at least one heat-dissipating element (60, 160, 260, 160a, 260a) comprises a helical winding of said wire-like element (61, 161, 261, 161a, 261a) having a circular or square geometry, wherein said at least one of said opposite end portions (64, 164, 264) of said at least one heat-dissipating element (60, 160, 260, 160a, 260a) comprises a rectilinear portion (65, 165, 265) of said wire-like element (61, 161, 261, 161a, 261a), wherein said wire-like element (61, 161, 261, 161a, 261a) preferably has a circular or square section.

11. Pad (1) according to any one of the previous claims, wherein said support frame (10) is made of aluminum and said at least one heat-dissipating element (60, 160, 260, 160a, 260a) is made of a material having a coefficient of thermal conductivity greater than that of aluminum.

12. Bicycle disc brake assembly, comprising at least one pair of pads (1) according to any one of the previous claims at least partially housed in a brake caliper (50), wherein preferably said at least one heat-dissipating element (60, 160, 260, 160a, 260a) is at least partially arranged outside of said brake caliper (50).

13. Brake caliper (50) for a bicycle disc brake, comprising a main body (52) having a slot (54) for housing at least one pair of pads (1), **characterized in that** said main body (52) comprises at least one heat-dissipating element (56, 56a, 56b).

14. Brake caliper (50) according to claim 13, wherein said at least one heat-dissipating element (56, 56a, 56b) is arranged at said slot (54), said brake caliper (50) preferably comprising at least one first heat-dissipating element (56a) arranged at a first side of said slot (54) and at least one second heat-dissipating element (56b) arranged at a second side of said slot (54) opposite to said first side.

15. Brake caliper (50) according to claim 13 or 14, wherein said at least one heat-dissipating element (56, 56a, 56b) comprises a plurality of fins (58), wherein the fins (58) of said plurality of fins are preferably all parallel to one another.
